# EUROPEAN PATENT SPECIFICATION

(11) **EP 4 067 678 B1**
(45) Date of publication and mention of the grant of the patent: **06.08.2025**
(21) Application number: 22163869.5
(22) Date of filing: 23.03.2022
(51) Int. Cl.: F16B 37/02

(54) **A FASTENER NUT**
BEFESTIGUNGSMUTTER
ÉCROU DE DISPOSITIF DE FIXATION

(30) Priority: 31.03.2021 EP 21382267; 06.04.2021 EP 21382286
(43) Date of publication of application: 05.10.2022
(73) Proprietor: Illinois Tool Works Inc., Glenview, IL 60025 (US)
(72) Inventor: ARISA BUSQUETS, Jaume, Glenview, 60025 (US)
(74) Representative: HGF

(56) References cited:
- DE-A1- 102012 019 838
- US-A- 2 090 640
- US-A- 5 139 380
- US-A- 949 897
- "ADVERTISEMENT", MACHINE DESIGN, PENTON MEDIA, CLEVELAND, OH, US, vol. 61, no. 9, 11 May 1989 (1989-05-11), pages 165, XP000108535, ISSN: 0024-9114

## Description

### Technical Field of Invention

The present invention relates to a fastener and method of manufacture. In particular, the present invention relates to a fastener nut intended for attachment of components, such as, for example, vehicle components, via threaded bolts or screws.

### Background

Fasteners and various embodiments of threaded nut members manufactured by various methods are well known. For example, typical flange nuts or lock nuts may comprise a hexagonal exterior and a threaded internal cylinder, as well as, an enlarged supporting surface or washer. The hexagonal exterior is configured for engagement with a tool, such as, a lug wrench or a hex key socket screwdriver. Fasteners of this type may be manufactured from a single piece, e.g. via forging, cold-forging, pressing or stamping. or through combining various parts which are joined together. When manufactured from a single piece, fastener nuts may be manufactured from wires or tubes of different thickness and/or material (e.g. steel or stainless steel, or any other ferrous material) and then hardened/strengthened using carbon, boron and/or heat treatment.

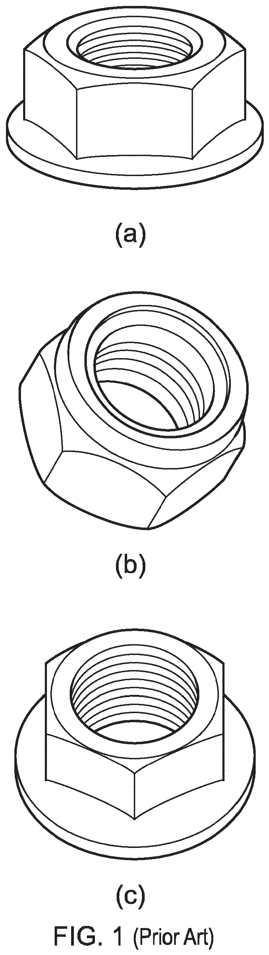

When forging or cold forming fasteners, material is often moved to form a desired outer and inner shape or profile. However, this type of fastener is relatively heavy due to relatively thick walls required to have enough material for an inner thread that is suitable to provide sufficient strength when tightened. Further, the manufacturing process of forged or cold-formed fasteners is relatively time consuming and costly. Figure 1 shows a variation of conventional fastener nuts that may be replaced by the fastener nut of the present invention including, for example, (a) standard flange nuts, (b) fastener nuts with a nylon ring to prevent loosening (i.e. a locking feature) and (c) flange nuts with a conical washer, e.g. a spring washer to provide axial flexibility and prevent fastening or loosening due to vibrations.

Fastener nuts specifically designed to reduce weight may be formed, for example, from (relatively thin) sheet metal via pressing or stamping. Though, currently available fastener nuts, such as, for example, flange nuts or lock nuts, are not suitable for high-strength connections. In particular, stamped or pressed sheet-metal hexagonal nuts provide relatively "weak" threading engagement due to the relatively thin side walls (reduced thread height) and the significantly reduced thickness of the inner surface comprising the threaded sections. Further, typical fastener nuts, such as, flanged nuts or lock nuts, are prone to loosen due to vibrations or other external forces without additional components or support such as seals, adhesives, locking rings or other locking features. A fastener nut is known from US 949 897 A.

Consequently, it is an object of the present invention to provide an improved fastener nut capable of mitigating at least some of the drawbacks mentioned above. In particular, it is an object of the present invention to provide a relatively lightweight fastener nut stamped or pressed from sheet metal with improved performance characteristics (e.g. 'Proof-Load' strength, tightening load, torque), but also an improved ease of use during installation or removal, during use.

### Summary of the Invention

An aspect of the invention is set out in the independent claim. Dependent claims describe optional features.

In a first aspect of the invention there is provided a fastener nut in accordance with claim 1. The fastener nut formed from an integral piece of sheet metal having a first axial end and an opposed second axial end along a central axis, comprising:
an annular head member at said first axial end, comprising a plurality of side walls defining a substantially polygonal external profile configured to engage with a tool and an internal profile comprising a thread with a thread groove configured to engage with a screw, wherein at least a portion of at least one or more, preferably each one, of said plurality of side walls is radially inset so as to form radially outward protruding corners with the radially inset side wall portion being between two such corners and preferably so as to form a substantially cylindrical internal axial passage, preferably concentric with the central axis,
wherein at least one or more, preferably all of the radially inset side wall portions comprises a thread groove with a groove deepness equal or greater as compared to the groove deepness of the thread in the area directly adjacent to said radially inset side wall portion; and
a flange member, extending radially outward from said plurality of side walls at said second axial end.

Advantageously, said head member and said flange member may be integrally formed from sheet metal.

This provides the advantage of a lightweight fastener nut formed from sheet metal having an internal thread that is configured to provide a maximised proof load. In particular, the fastener nut of the present invention provides for optimally shaped side walls where a central portion is moved radially inwards (i.e. to wards the central axis of the annular head member), therefore maximising the material thickness and area that can be utilised to form the internal thread. As a result, an internal thread can be provided within the side walls that has an optimised thread height so as to maximise its proof load and tightening torque, while minimising the amount of material required and its resultant weight. Furthermore, the present invention provides the advantage that the fastener nut can be stamped (i.e. by embossing, punching and/or cutting) or pressed without the need to redistribute material (e.g. metal, steel) to different locations in order to create a polygonal (e.g. hexagonal) nut profile, simplifying and quicken the manufacturing process, minimising time and costs. The outwardly protruding corners of adjoining side walls provide an easily shaped polygonal profile suitable for operable engagement with a standard tool but without the need of adding or shifting material, for example, via hot or cold forging.

The fastener nut further comprises a joining portion integrally formed between said head member and said flange member and configured to transmit, resiliently, an axial force between said first and second axial ends. This provides the advantage of a maximised proof load and allowing higher tightening loads. In particular, the resilient characteristics of the joining portion provides for an increase in based deflection of the axial forces maximising the integrity between the nut the bolt, and the engaged component.

Advantageously, said joining portion may be any one of a substantially dome-shaped and a ball-cone-shaped joining portion.

Advantageously, said joining portion may further be configured to guidingly receive and centre a corresponding fastener during use. This provides the advantage of an improved ease of use, as well as, durability due to minimised wear and tear from optimising the installation.

Advantageously, an inner surface of said central portion of each one of said plurality of side walls may be provided with a thread section, so as to form an internal screw thread within said internal axial passage configured to threadingly engage with the corresponding fastener during use.

Preferably, said external profile defined by said plurality of side walls may be hexagonal.

Advantageously, said sheet metal may be a high-carbon steel.

In a second aspect of the invention, there is provided a fastener nut in accordance with claim 7. The fastener nut formed from an integral piece of sheet metal having a first axial end and an opposed second axial end along a central axis, comprising:
an annular head member at said first axial end, comprising a plurality of side walls defining a substantially polygonal external profile configured to engage with a tool, wherein a central portion of each one of said plurality of side walls is radially inset, defining an internal surface parallel to said centre axis, so as to form a substantially cylindrical internal axial passage and radially outward protruding corners between adjoining ones of said plurality of side walls; and
a flange member, extending radially outward from said plurality of side walls at said second axial end.

Advantageously, said head member and said flange member may be integrally formed form sheet metal.

The fastener further comprises a joining portion integrally formed between said head member and said flange member and configured to transmit, resiliently, an axial force between said first and second axial ends.

Advantageously, said joining portion may be any one of a substantially dome-shaped and a ball-cone-shaped joining portion.

Preferably, said joining portion may further be configured to guidingly receive and centre a corresponding fastener during use.

Even more preferably, an inner surface of said central portion of each one of said plurality of side walls may be provided with a thread section, so as to form an internal screw thread within said internal axial passage configured to threadingly engage with the corresponding fastener during use.

Advantageously, said external profile may be defined by said plurality of side walls is hexagonal.

Preferably, said sheet metal may be a high-carbon steel.

In a third aspect of the invention there is provided a method for manufacturing a fastener nut according to the first or second aspect, in accordance with claim 13, comprising the steps of:
- providing a laminar sheet metal of a predetermined thickness;
- stamping the laminar sheet metal with a stamping press comprising a die configured to form a fastener nut according to the first or second aspect;
- threading a substantial cylindrical central passage of said fastener nut with a predetermined thread pitch and thread height;
- applying heat treatment to said fastener nut.

This provides the advantage of a simplified method, making the manufacturing process of relatively lightweight fastener nuts less time consuming and more cost effective.

### Brief Description of the Drawings

An exemplary embodiment of the invention is explained in more detail hereinbelow with reference to the figures:
**Figure 1** **(Prior Art)** shows examples of conventional fastener nuts, such as, (a) a standard flange nut, (b) a lock nut with a nylon ring and (c) a flange nut with a conical washer;
**Figure 2** shows an illustration of an example embodiment of the fastener nut of the present invention comprising a joining member (also known as "smart joint"), here the fastener nut is a hexagonal light-nut;
**Figure 3** shows (a) a cross section of the fastener nut of the present invention during insertion of a screw, (b) the cross sectional profile of the dome-shaped joining portion of the present invention and, in contrast to the dome-shaped joining portion, (c) a cone-shaped cross sectional profile and (d) a radius profile of a joining portion;
**Figure 4** is an illustration comparing the deflection characteristics (axial load vs. deflection) the fastener nut ("ITW CIP") of the present invention, comprising a dome-shaped joining portion ("smart joint"), and a cold-headed nut;
**Figure 5** is an illustration of (a) a load-proof test and (b) the resulting Load-displacement graph comparing two different nuts (Nut 1, Nut 2);
**Figure 6** is an illustration of (a) a tightening-torque test and (b) the resulting torque-angle-force graph of an example fastener nut;
**Figure 7** shows (a) a graph illustrating the change of residual load after 24 hours (h) when tightened to 145 Nm and (b) corresponding table of measure loads and torques at the start and after 24h for different samples of the fastener nut, and
**Figure 8** shows (a) a graph illustrating the change of residual load after 72 hours (h) when tightened to 250Nm and (b) corresponding table of measure loads and torques at the start and after 24h for different samples of the fastener nut
**Figure 9** shows an illustration of typical application(s) for the fastener nut of the present invention so as to reduce the overall weight of the assembly.

### Detailed Description

The described example embodiment relates to a fastener nut for use with vehicle components, and particularly, a fastener nut (or light-nut) stamped or pressed from sheet metal material. However, the invention is not limited for use with vehicle components but may be used for any suitable fastening. Through the description, the terms 'fastener nut, sheet-metal nut and 'light-nut' are used interchangeably.

Certain terminology is used in the following description for convenience only and is not limiting. The words 'right', 'left', 'lower', 'upper', 'front', 'rear', 'upward', 'down', 'downward', 'above' and 'below' designate directions in the drawings to which reference is made and are with respect to the described component when assembled and mounted (e.g. *in situ*). The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Through the description and claims of this specification, the terms 'comprise' and 'contain', and variations thereof, are interpreted to mean 'including but not limited to', and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

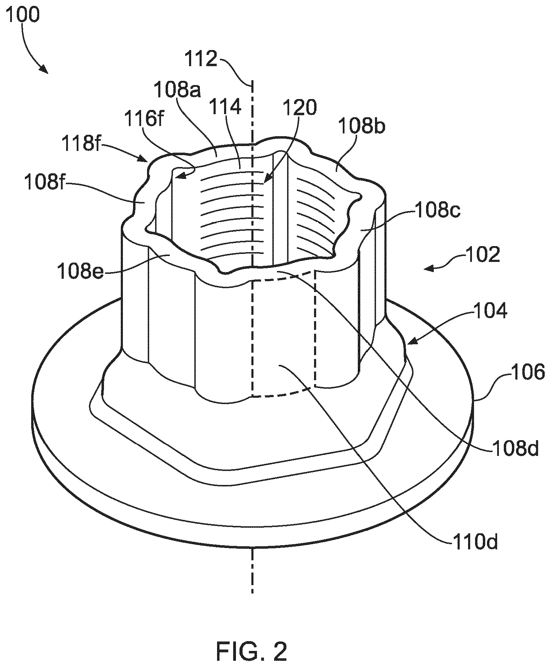

Referring now to Figure 2, and according to a first example embodiment of the present invention, the fastener nut 100 is manufactured by stamping sheet metal without forge-moving material, i.e. by simply bending sheet metal into the desired shape. This particular example embodiment comprises integrally formed head member 102, joining portion 104 (also known as smart joint) and flange member 106. The head member 102 comprises six side walls 108a - 108f integrally joint and arranged in a hexagonal profile that is suitable for engagement with a standard tool, such as, a wrench or hex key (not shown).

During the forming or stamping process, a central portion 110a - 110f (central portion 110d is representative for the other central portions) of each one of the side walls 108a - 108f is pressed radially inwards (i.e. towards a central axis 112 of the annular head member 102) by a predetermined inset distance (e.g. 50% of the thickness of the sheet metal), so as to form an arcuate cross sectional profile of a predetermined radius. The radially inwardly pressed (i.e. inset) central portions 110a - 110f define a substantially cylindrical internal surface 114 interrupted by circumferentially spaced voids 116a - 116f of the corners 118a - 118f (void 116f and corner 118f are representatives for the other voids and corners). Each one of the corners 118a - 118f has an arcuate outer surface profile and is protruding radially outwards (i.e. away from the central axis of the annular head member 102).

It is understood by the person skilled in the art, that the inset distance (i.e. radial offset between an outer surface of the corners 118a - 118f and an outer surface of the central portions 110a - 110f) may be any distance suitable to define a desired internal diameter of the cylindrical internal surface 114.

An internal thread 120 is provided on the cylindrical internal surface 114 formed by the central portions 110a - 110f of the side walls 108a - 108f. The internal thread 120 may be a metric sized standardised thread and may be formed by any suitable process, such as, for example, cutting or cold-forming. Because the central portions 110a - 110f of the side walls 108a - 108f are moved inwardly, the maximum thickness of the sheet metal material may be used to form the internal thread 120 with a thread height for maximum load strength. This way, a relatively "light weight" (i.e. a weight saving compared to equivalently sized and utilised fastener nuts) fastener nut 100 is provided that is specifically designed for "high performance" (i.e. a relatively high torque and high proof load in view of equivalent, "heavier" conventional fastener nuts). In a particular example embodiment, the fastener nut 100 of the present invention may be around 50% lighter than conventional, similarly sized and similarly performing fastener nuts.

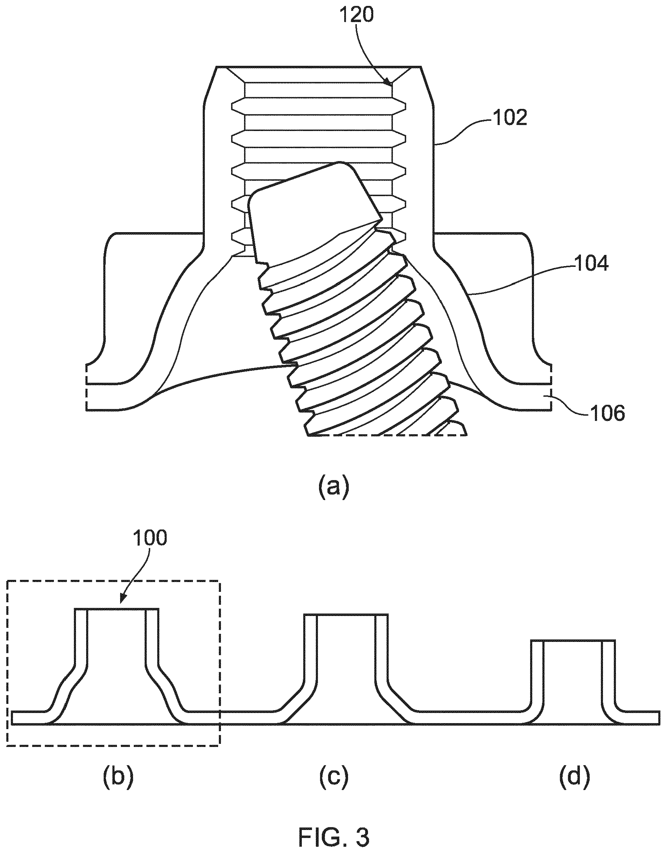

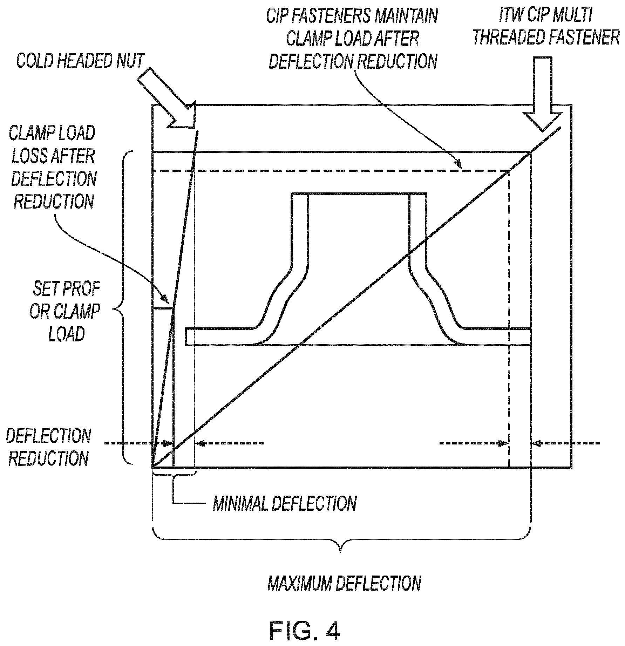

Referring now to Figures 3 and 4, in particular, the joining portion 104 may be integrally formed by pressing or stamping, so as to provide a dome-shaped or ball-shaped side wall profile between the head member 102 and the flange member 106 (with its wider diameter at the flange member end). The joining portion 104 is particularly adapted to accept higher torques to minimise or even avoid loosening of the screw during its use. In particular, the axially resilient characteristics help to avoid squeak and rattling by keeping the fasteners tightly together. Further, a higher maximum proof load (compared to conventional fastener nuts for similar use) allows for a higher tightening load that can be applied to the fastener nut 100. In addition, the specific ball- or dome-shaped cross sectional (axially) profile provides for an improved ease of use, because the entering screw is more easily centred by guiding the screw into a correct position before engaging the internal thread 120 of the head member 102. Different profiles to the preferred ball- or dome-shaped profile of the present invention (dotted square) are shown for a more direct comparison illustrating the non-deflective structure of the cone or straight radius design.

Figure 4 shows an illustration of load and deflection behaviour for a conventional cold headed or single threaded fastener nut and the fastener nut 100 of the present invention.

Here, as the clamp force increases, the deflection in the fastener gradually increases. Once assembled, small decreases in joint deflection usually occur, though, the durability provided by the fastener nut 100 prevents any loss of joint integrity, as may be the case with the conventional fastener nuts where a minimal deflection can lead to load loss and loosening of the fastener nut.

The flange member 106 is integrally formed by pressing or stamping, so as to provide a radially outward extending flange having a predetermined diameter that is greater than the diameter of the head member 102 and joining portion 104. Preferably, the flange member 106 may have a circular footprint. However, it is understood by the person skilled in the art that any other suitable footprint may be used (e.g. square etc.).

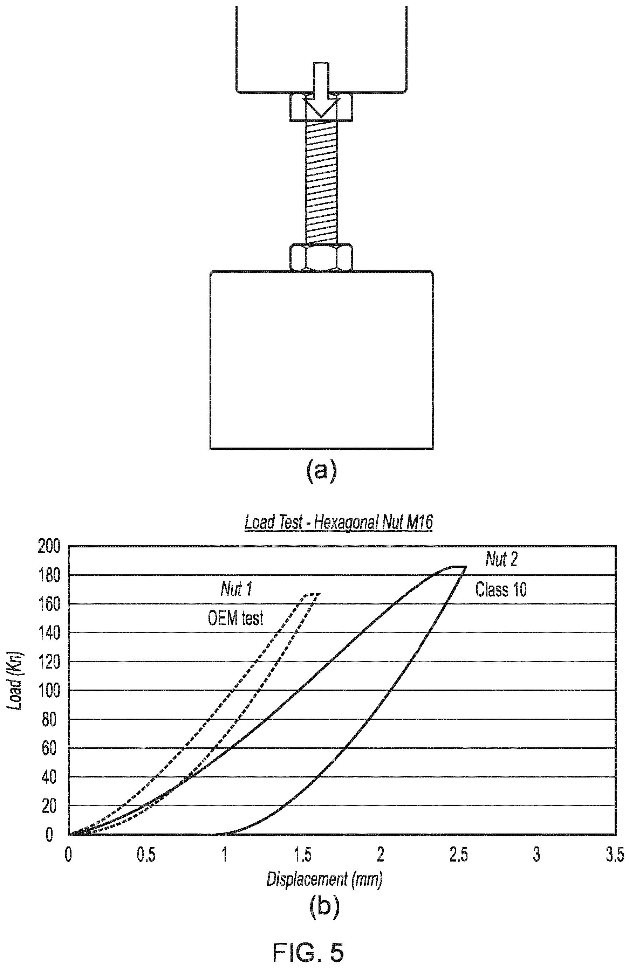

Referring now to Figures 5 to 8, example performance test procedures are shown to illustrate the improvements provided by the fastener nut 100 of the present invention. For example, Figure 5 illustrates an example load test of a hexagonal fastener nut sized M16 (standard metric hex nut size) with 'nut 1' OEM test according to FCA 9.52605/01 being successful at 167kN (kilo Newton) for 15s (seconds) with no deformation, the nut can be unscrewed by hand and there was no permanent elongation. 'Nut 2' Class 10 was tested according to UNE-EN ISO 898-2:2013 being successful at 185kN for 15s with no deformation, the nut can be unscrewed by hand and there was 1mm (millimetre) elongation due to deformation of the screw.

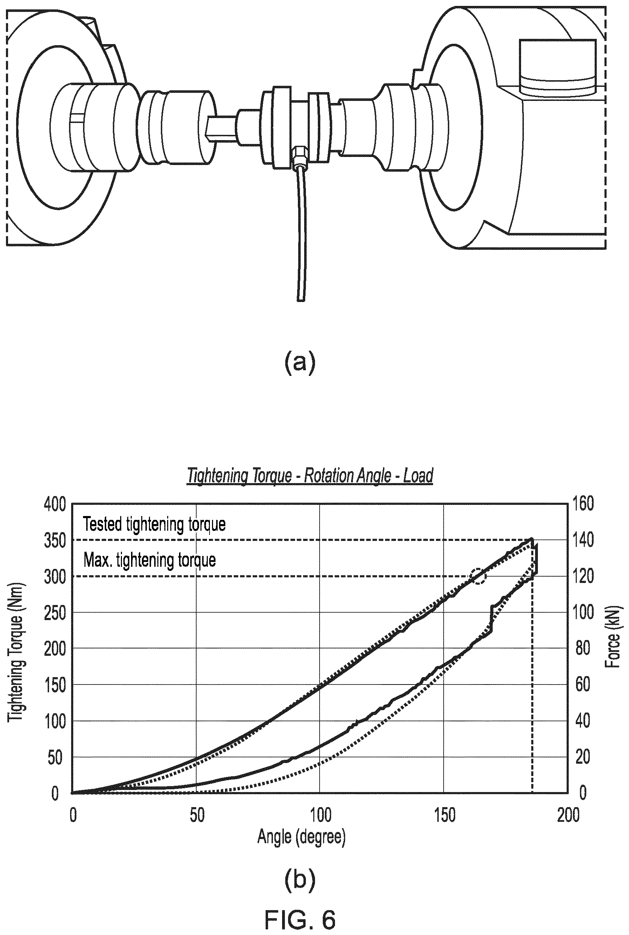

Figure 6 illustrates a tightening torque test according to UNE-EN 14399-2:2009, the nut can be unscrewed by hand and the tested tightening torque was 350Nm (Newton-meter) after 180° (degrees) turn. The maximum tightening torque with a 17% safety coefficient was 300Nm after 180° turn.

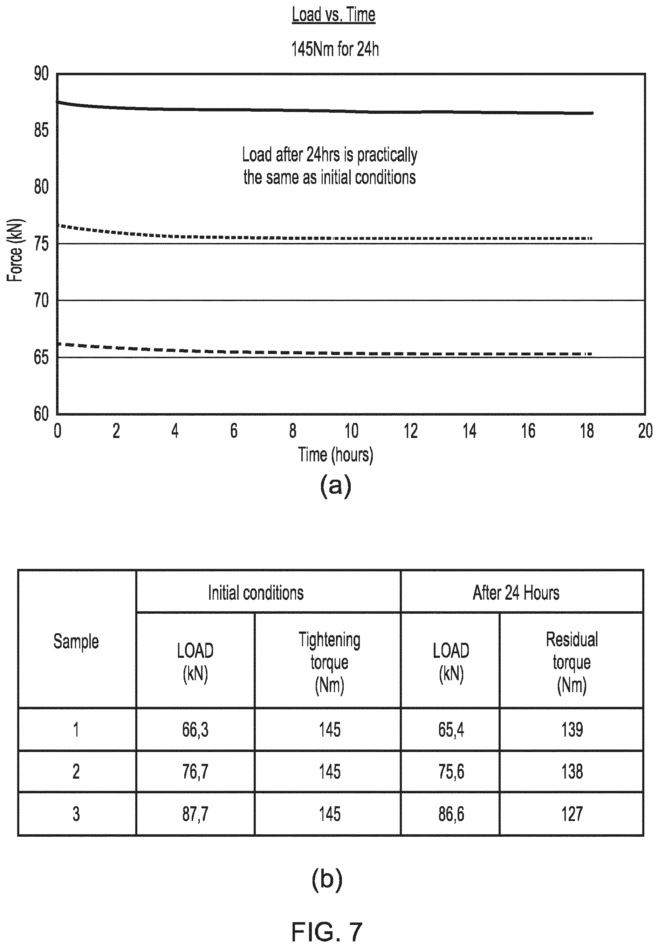

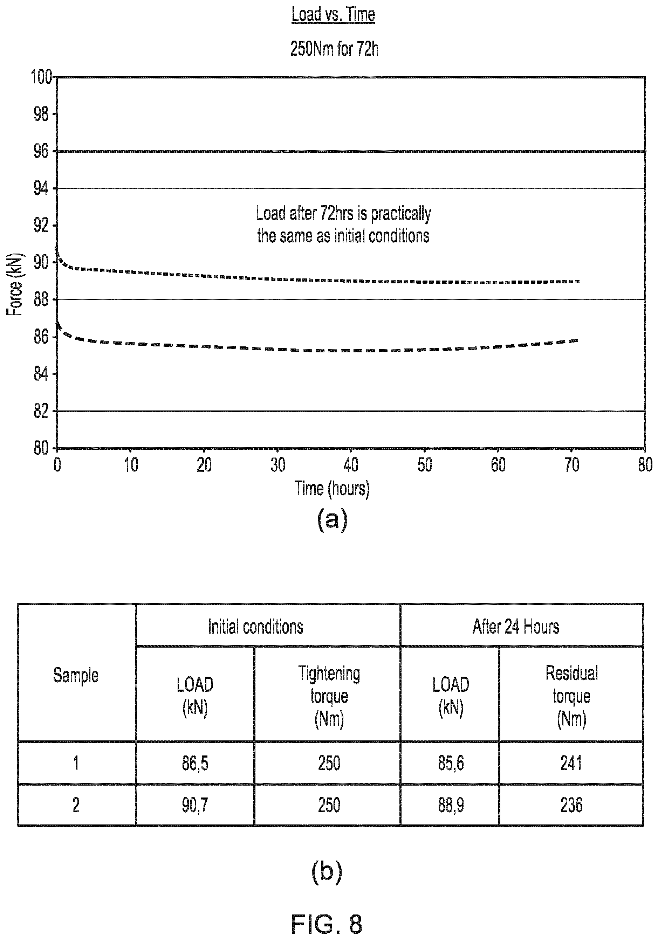

Figures 7 and 8 illustrate example results of residual load after 24h (hours) for different samples of the fastener nut. In Test 1 (Figure 7), the tightening torque was 145Nm after 24h, i.e. a minimal reduction in load (less than 2% reduction) and the residual torque with less than 15% reduction. In Test 2 (Figure 8), the tightening torque was 250Nm after 72h, i.e. a minimal reduction in load (less than 2% reduction) and the residual torque with less than 6% reduction.

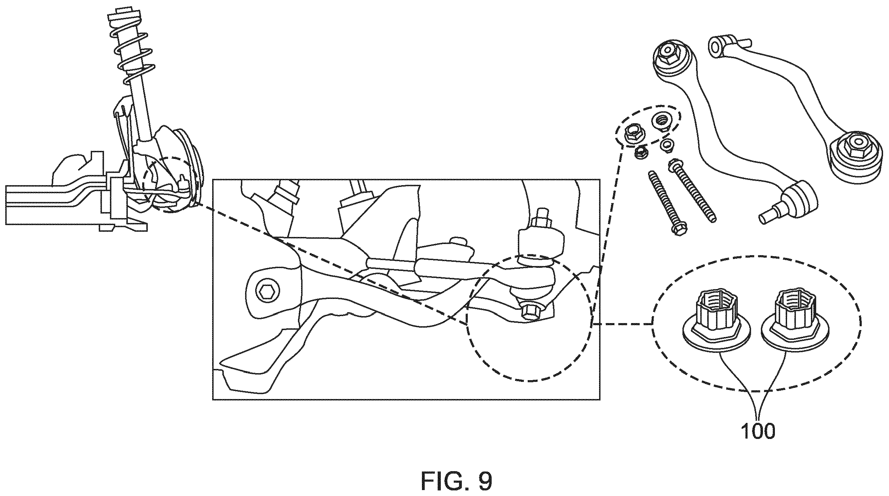

Figure 9 shows illustrations of typical applications of the fastener nut 100 (i.e. light nut) of the present invention, such as, for example, at a vehicle front suspension (suspension arm) where conventional fastener nuts can be replaced by fastener nut 100 (e.g. M16 light nut).

For manufacture of the fastener nut 100 of the present invention, a sheet metal is simply stamped or pressed into the desired shape using one or more suitable die(s), to then provide an internal thread via cutting or forming, before a suitable heat treatment is applied to strengthen the material (e.g. hardening). The sheet metal may be a high carbon steel or a Boron steel (weldable).

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible, for example, variations may exist in shape, size, arrangement (i.e. a single unitary components or two separate components), assembly or the like.

### List of reference numbers:

- 100: fastener nut
- 102: head member
- 104: joining portion (smart joint)
- 106: flange member
- 108: side walls (a)-(f)
- 110: central portion (a)-(f)
- 112: central axis
- 114: internal surface
- 116: internal voids formed by corners (a)-(f)
- 118: corners (a)-(f)
- 120: internal thread

## Claims

1. A fastener nut (100) formed from an integral piece of sheet metal having a first axial end and an opposed second axial end along a central axis (112), comprising:
an annular head member (102) at said first axial end, comprising a plurality of side walls (108a, 108b, 108c, 108d, 108e, 108f) defining a substantially polygonal external profile configured to engage with a tool and an internal profile comprising a thread with a thread groove configured to engage with a screw, wherein at least a portion of at least one or more, preferably each one, of said plurality of side walls (108a, 108b, 108c, 108d, 108e, 108f) is radially inset so as to form radially outward protruding corners (118a, 118b, 118c, 118d, 118e, 118f) with the radially inset side wall portion being between two such corners (118a, 118b, 118c, 118d, 118e, 118f) and preferably so as to form a substantially cylindrical internal axial passage, preferably concentric with the central axis (112),
wherein at least one or more, preferably all of the radially inset side wall portions comprises a thread groove with a groove deepness equal or greater as compared to the groove deepness of the thread in the area directly adjacent to said radially inset side wall portion; and
a flange member (106), extending radially outward from said plurality of side walls (108a, 108b, 108c, 108d, 108e, 108f) at said second axial end; and
a joining portion (104) integrally formed between said head member (102) and said flange member (106) and configured to transmit, resiliently, an axial force between said first and second axial ends.

2. A fastener nut according to claim 1, wherein said head member (102) and said flange member (106) are integrally formed from sheet metal.

3. A fastener nut according to any one of the preceding claims, wherein said joining portion (104) is any one of a substantially dome-shaped and a ball-cone-shaped joining portion.

4. A fastener nut according to any one of the preceding claims, wherein said joining portion (104) is further configured to guidingly receive and centre a corresponding fastener during use.

5. A fastener nut according to any one of the preceding claims, wherein an inner surface (114) of a central portion (110a, 110b, 110c, 110d, 110e, 110f) of each one of said plurality of side walls (108a, 108b, 108c, 108d, 108e, 108f) is provided with a thread section, so as to form an internal screw thread (120) within said internal axial passage configured to threadingly engage with the corresponding fastener during use.

6. A fastener nut according to any one of the preceding claims, wherein said external profile defined by said plurality of side walls (108a, 108b, 108c, 108d, 108e, 108f) is hexagonal and wherein said sheet metal is a high-carbon steel.

7. A fastener nut (100) formed from an integral piece of sheet metal having a first axial end and an opposed second axial end along a central axis (112), comprising:
an annular head member (102) at said first axial end, comprising a plurality of side walls (108a, 108b, 108c, 108d, 108e, 108f) defining a substantially polygonal external profile configured to engage with a tool, wherein a central portion (110a, 110b, 110c, 110d, 110e, 110f) of each one of said plurality of side walls (108a, 108b, 108c, 108d, 108e, 108f) is radially inset, defining an internal surface parallel to said central axis (112), so as to form a substantially cylindrical internal axial passage and radially outward protruding corners (118a, 118b, 118c, 118d, 118e, 118f) between adjoining ones of said plurality of side walls (108a, 108b, 108c, 108d, 108e, 108f);
a flange member (106), extending radially outward from said plurality of side walls (108a, 108b, 108c, 108d, 108e, 108f) at said second axial end; and
a joining portion (104) integrally formed between said head member (102) and said flange member (106) and configured to transmit, resiliently, an axial force between said first and second axial ends.

8. A fastener nut according to claim 7, wherein said head member (102) and said flange member (106) are integrally formed from sheet metal.

9. A fastener nut according to any one of claim 7 and 8, wherein said joining portion (104) is any one of a substantially dome-shaped and a ball-cone-shaped joining portion.

10. A fastener nut according to any one of claims 7 to 9, wherein said joining portion (104) is further configured to guidingly receive and centre a corresponding fastener during use.

11. A fastener nut according to any one of claims 7 to 10, wherein an inner surface (114) of said central portion (110a, 110b, 110c, 110d, 110e, 110f) of each one of said plurality of side walls (108a, 108b, 108c, 108d, 108e, 108f) is provided with a thread section, so as to form an internal screw thread (120) within said internal axial passage configured to threadingly engage with the corresponding fastener during use.

12. A fastener nut according to any one of claims 7 to 11, wherein said external profile defined by said plurality of side walls (108a, 108b, 108c, 108d, 108e, 108f) is hexagonal and wherein said sheet metal is a high-carbon steel.

13. A method for manufacturing a fastener nut (100) according to any one of the preceding claims, comprising the steps of:
- providing a laminar sheet metal of a predetermined thickness;
- stamping the laminar sheet metal with a stamping press comprising a die configured to form a fastener nut (100) according to any one of claims 1 to 6 or any one of claims 7 to 12;
- threading a substantial cylindrical central passage of said fastener nut (100) with a predetermined thread pitch and thread height;
- applying heat treatment to said fastener nut (100).

## Patentansprüche

1. Befestigungsmutter (100), die aus einem einstückigen Stück Blech mit einem ersten axialen Ende und einem gegenüberliegenden zweiten axialen Ende entlang einer Mittelachse (112) gebildet ist, Folgendes aufweisend:
ein ringförmiges Kopfelement (102) am ersten axialen Ende, das eine Vielzahl von Seitenwänden (108a, 108b, 108c, 108d, 108e, 108f) aufweist, die ein im Wesentlichen polygonales Außenprofil definieren, das so ausgebildet ist, dass es mit einem Werkzeug in Eingriff kommt, und ein Innenprofil, das ein Gewinde mit einer Gewindenut aufweist, die so ausgebildet ist, dass sie mit einer Schraube in Eingriff kommt, wobei zumindest ein Teil von zumindest einer oder mehreren, vorzugsweise jede, der Vielzahl von Seitenwänden (108a, 108b, 108c, 108d, 108e, 108f) radial so eingelassen ist, dass sie radial nach außen vorstehende Kanten (118a, 118b, 118c, 118d, 118e, 118f) mit dem radial eingelassenen Seitenwandabschnitt zwischen zwei solchen Kanten (118a, 118b, 118c, 118d, 118e, 118f) bildet und vorzugsweise, um vorzugsweise konzentrisch zur Mittelachse (112), einen im Wesentlichen zylindrischen inneren axialen Durchgang zu bilden,
wobei zumindest ein oder mehrere, vorzugsweise alle der radial eingelassenen Seitenwandabschnitte eine Gewindenut mit einer Nuttiefe aufweisen, die gleich oder größer ist als die Nuttiefe des Gewindes in dem Bereich, der direkt an den radial eingelassenen Seitenwandabschnitt angrenzt; und
ein Flanschelement (106), das sich von den mehreren Seitenwänden (108a, 108b, 108c, 108d, 108e, 108f) am zweiten axialen Ende radial nach außen erstreckt; und
einen Verbindungsabschnitt (104), der einstückig zwischen dem Kopfelement (102) und dem Flanschelement (106) gebildet und so ausgebildet ist, dass er eine axiale Kraft zwischen dem ersten und dem zweiten axialen Ende federnd überträgt.

2. Befestigungsmutter nach Anspruch 1, wobei das Kopfelement (102) und das Flanschelement (106) einstückig aus Blech gebildet sind.

3. Befestigungsmutter nach einem der vorhergehenden Ansprüche, wobei der Verbindungsabschnitt (104) ein im Wesentlichen kuppelförmiger oder ein kugelkegelförmiger Verbindungsabschnitt ist.

4. Befestigungsmutter nach einem der vorhergehenden Ansprüche, wobei der Verbindungsabschnitt (104) ferner so ausgebildet ist, dass er ein entsprechendes Befestigungselement während des Gebrauchs führend aufnimmt und zentriert.

5. Befestigungsmutter nach einem der vorhergehenden Ansprüche, wobei eine Innenfläche (114) eines zentralen Abschnitts (110a, 110b, 110c, 110d, 110e, 110f) jeder der Vielzahl von Seitenwänden (108a, 108b, 108c, 108d, 108e, 108f) so mit einem Gewindeabschnitt versehen ist, dass sie ein Innengewinde (120) innerhalb des inneren axialen Durchgangs bildet, das so ausgebildet ist, dass es das entsprechende Gewinde während des Gebrauchs gewindemäßig in Eingriff nimmt.

6. Befestigungsmutter nach einem der vorhergehenden Ansprüche, wobei das durch die Vielzahl von Seitenwänden (108a, 108b, 108c, 108d, 108e, 108f) definierte Außenprofil hexagonal ist und wobei das Metallblech ein Stahl mit hohem Kohlenstoffgehalt ist.

7. Befestigungsmutter (100), die aus einem einstückigen Stück Blech mit einem ersten axialen Ende und einem gegenüberliegenden zweiten axialen Ende entlang einer Mittelachse (112) gebildet ist, Folgendes aufweisend:
ein ringförmiges Kopfelement (102) am ersten axialen Ende, das eine Vielzahl von Seitenwänden (108a, 108b, 108c, 108d, 108e, 108f) aufweist, die ein im Wesentlichen polygonales Außenprofil definieren, das so ausgebildet ist, dass es mit einem Werkzeug in Eingriff kommt, wobei ein zentraler Abschnitt (110a, 110b, 110c, 110d, 110e, 110f) jeder der Vielzahl von Seitenwänden (108a, 108b, 108c, 108d, 108e, 108f) radial eingelassen ist, wobei eine Innenfläche parallel zur zentralen Achse (112) definiert wird, um einen im Wesentlichen zylindrischen inneren axialen Durchgang und radial nach außen vorstehende Kanten (118a, 118b, 118c, 118d, 118e, 118f) zwischen benachbarten der Vielzahl von Seitenwänden (108a, 108b, 108c, 108d, 108e, 108f) zu bilden;
ein Flanschelement (106), das sich von den mehreren Seitenwänden (108a, 108b, 108c, 108d, 108e, 108f) am zweiten axialen Ende radial nach außen erstreckt; und
einen Verbindungsabschnitt (104), der einstückig zwischen dem Kopfelement (102) und dem Flanschelement (106) gebildet und so ausgebildet ist, dass er eine axiale Kraft zwischen dem ersten und dem zweiten axialen Ende federnd überträgt.

8. Befestigungsmutter nach Anspruch 7, wobei das Kopfelement (102) und das Flanschelement (106) einstückig aus Blech gebildet sind.

9. Befestigungsmutter nach einem der Ansprüche 7 und 8, wobei der Verbindungsabschnitt (104) ein im Wesentlichen kuppelförmiger oder ein kugelkegelförmiger Verbindungsabschnitt ist.

10. Befestigungsmutter nach einem der Ansprüche 7 bis 9, wobei der Verbindungsabschnitt (104) ferner so ausgebildet ist, dass er ein entsprechendes Befestigungselement während des Gebrauchs führend aufnimmt und zentriert.

11. Befestigungsmutter nach einem der Ansprüche 7 bis 10, wobei eine Innenfläche (114) des zentralen Abschnitts (110a, 110b, 110c, 110d, 110e, 110f) jeder der Vielzahl von Seitenwänden (108a, 108b, 108c, 108d, 108e, 108f) mit einem Gewindeabschnitt versehen ist, um ein Innengewinde (120) innerhalb des inneren axialen Durchgangs zu bilden, das so ausgebildet ist, dass es das entsprechende Gewinde während des Gebrauchs gewindemäßig in Eingriff nimmt.

12. Befestigungsmutter nach einem der Ansprüche 7 bis 11, wobei das durch die Vielzahl von Seitenwänden (108a, 108b, 108c, 108d, 108e, 108f) definierte Außenprofil hexagonal ist und wobei das Metallblech ein Stahl mit hohem Kohlenstoffgehalt ist.

13. Verfahren zur Herstellung einer Befestigungsmutter (100) nach einem der vorhergehenden Ansprüche, folgende Schritte aufweisend:
- Bereitstellen eines Laminarblechs einer vorbestimmten Dicke;
- Stanzen des Laminarblechs mit einer Stanzpresse, die eine Matrize aufweist, die so ausgebildet ist, dass sie eine Befestigungsmutter (100) nach einem der Ansprüche 1 bis 6 oder einem der Ansprüche 7 bis 12 bildet;
- Gewindeschneiden eines im Wesentlichen zylindrischen zentralen Durchgangs der Befestigungsmutter (100) mit einer vorbestimmten Gewindesteigung und Gewindehöhe;
- Wärmebehandeln der Befestigungsmutter (100).

## Revendications

1. Écrou de fixation (100) formé à partir d'une pièce monobloc de tôle métallique ayant une première extrémité axiale et une deuxième extrémité axiale opposée le long d'un axe central (112), comprenant :
un élément de tête annulaire (102) au niveau de ladite première extrémité axiale, comprenant une pluralité de parois latérales (108a, 108b, 108c, 108d, 108e, 108f) définissant un profil externe sensiblement polygonal configuré pour venir en prise avec un outil et un profil interne comprenant un filet avec une rainure filetée configurée pour venir en prise avec une vis, dans lequel l'au moins une portion de l'au moins une ou plusieurs, de préférence chacune, de ladite pluralité de parois latérales (108a, 108b, 108c, 108d, 108e, 108f) est en retrait radialement de manière à former des coins (118a, 118b, 118c, 118d, 118e, 118f) avec la portion de paroi latérale radialement en retrait qui est entre deux de ces coins (118a, 118b, 118c, 118d, 118e, 118f) et de préférence de manière à former un passage axial interne sensiblement cylindrique, de préférence concentrique avec l'axe central (112),
dans lequel l'au moins une ou plusieurs, de préférence toutes les portions de paroi latérale radialement en retrait comprennent une rainure filetée avec une profondeur de rainure égale ou supérieure comparativement à la profondeur de rainure du filet dans la zone directement adjacente à ladite portion de paroi latérale radialement en retrait ; et
un élément de bride (106), s'étendant radialement vers l'extérieur depuis ladite pluralité de parois latérales (108a, 108b, 108c, 108d, 108e, 108f) au niveau de ladite deuxième extrémité axiale ; et
une portion de jonction (104) formée d'un seul tenant entre ledit élément de tête (102) et ledit élément de bride (106) et configurée pour transmettre, de manière élastique, une force axiale entre lesdites première et deuxième extrémités axiales.

2. Écrou de fixation selon la revendication 1, dans lequel ledit élément de tête (102) et ledit élément de bride (106) sont formés d'un seul tenant à partir d'une tôle métallique.

3. Écrou de fixation selon l'une quelconque des revendications précédentes, dans lequel ladite portion de jonction (104) est l'une quelconque parmi une portion de jonction sensiblement en forme de dôme et une portion de jonction en forme de cône sphérique.

4. Écrou de fixation selon l'une quelconque des revendications précédentes, dans lequel ladite portion de jonction (104) est en outre configurée pour recevoir et centrer de manière guidante une fixation correspondante pendant l'utilisation.

5. Écrou de fixation selon l'une quelconque des revendications précédentes, dans lequel une surface intérieure (114) d'une portion centrale (110a, 110b, 110c, 110d, 110e, 110f) de chacune de ladite pluralité de parois latérales (108a, 108b, 108c, 108d, 108e, 108f) est pourvue d'une section filetée, de manière à former un filetage de vis interne (120) au sein dudit passage axial interne configuré pour venir en prise par filetage avec la fixation correspondante pendant l'utilisation.

6. Écrou de fixation selon l'une quelconque des revendications précédentes, dans lequel ledit profil externe défini par ladite pluralité de parois latérales (108a, 108b, 108c, 108d, 108e, 108f) est hexagonal et dans lequel ladite tôle métallique est un acier à haute teneur en carbone.

7. Écrou de fixation (100) formé à partir d'une pièce monobloc de tôle métallique ayant une première extrémité axiale et une deuxième extrémité axiale opposée le long d'un axe central (112), comprenant :
un élément de tête annulaire (102) au niveau de ladite première extrémité axiale, comprenant une pluralité de parois latérales (108a, 108b, 108c, 108d, 108e, 108f) définissant un profil externe sensiblement polygonal configuré pour venir en prise avec un outil, dans lequel une portion centrale (110a, 110b, 110c, 110d, 110e, 110f) de chacune de ladite pluralité de parois latérales (108a, 108b, 108c, 108d, 108e, 108f) est radialement en retrait, définissant une surface interne parallèle audit axe central (112), afin de former un passage axial interne sensiblement cylindrique et des coins faisant saillie radialement vers l'extérieur (118a, 118b, 118c, 118d, 118e, 118f) entre des parois contiguës de ladite pluralité de parois latérales (108a, 108b, 108c, 108d, 108e, 108f) ;
un élément de bride (106), s'étendant radialement vers l'extérieur depuis ladite pluralité de parois latérales (108a, 108b, 108c, 108d, 108e, 108f) au niveau de ladite deuxième extrémité axiale ; et
une portion de jonction (104) formée d'un seul tenant entre ledit élément de tête (102) et ledit élément de bride (106) et configurée pour transmettre, de manière élastique, une force axiale entre lesdites première et deuxième extrémités axiales.

8. Écrou de fixation selon la revendication 7, dans lequel ledit élément de tête (102) et ledit élément de bride (106) sont formés d'un seul tenant à partir d'une tôle métallique.

9. Écrou de fixation selon l'une quelconque des revendications 7 et 8, dans lequel ladite portion de jonction (104) est l'une quelconque parmi une portion de jonction sensiblement en forme de dôme et une portion de jonction en forme de cône sphérique.

10. Écrou de fixation selon l'une quelconque des revendications 7 à 9, dans lequel ladite portion de jonction (104) est en outre configurée pour recevoir et centrer de manière guidante une fixation correspondante pendant l'utilisation.

11. Écrou de fixation selon l'une quelconque des revendications 7 à 10, dans lequel une surface intérieure (114) de ladite portion centrale (110a, 110b, 110c, 110d, 110e, 110f) de chacune de ladite pluralité de parois latérales (108a, 108b, 108c, 108d, 108e, 108f) est pourvue d'une section filetée, de manière à former un filetage de vis interne (120) au sein dudit passage axial interne configuré pour venir en prise par filetage avec la fixation correspondante pendant l'utilisation.

12. Écrou de fixation selon l'une quelconque des revendications 7 à 11, dans lequel ledit profil externe défini par ladite pluralité de parois latérales (108a, 108b, 108c, 108d, 108e, 108f) est hexagonal et dans lequel ladite tôle métallique est un acier à haute teneur en carbone.

13. Procédé de fabrication d'un écrou de fixation (100) selon l'une quelconque des revendications précédentes, comprenant les étapes suivantes :
- la fourniture d'une tôle métallique en feuillets d'une épaisseur prédéterminée ;
- l'estampage de la tôle métallique en feuillets avec une presse à estamper comprenant une matrice configurée pour former un écrou de fixation (100) selon l'une quelconque des revendications 1 à 6 ou l'une quelconque des revendications 7 à 12 ;
- le filetage d'un passage central sensiblement cylindrique dudit écrou de fixation (100) avec un pas de filetage et une hauteur de filetage prédéterminés ;
- l'application d'un traitement thermique audit écrou de fixation (100).
